# EUROPEAN PATENT SPECIFICATION

(11) **EP 2 269 466 B1**
(45) Date of publication and mention of the grant of the patent: **24.01.2018**
(21) Application number: 10167482.8
(22) Date of filing: 28.06.2010
(51) Int. Cl.: A23C 13/16, A23C 19/082, A23C 19/045

(54) **Cream cheese and method of manufacture**
Frischkäse und Herstellungsverfahren
Fromage à la crème et procédé de fabrication

(30) Priority: 30.06.2009 US 221892 P
(43) Date of publication of application: 05.01.2011
(73) Proprietor: Kraft Foods R & D, Inc., Deerfield, IL 60015 (US)
(72) Inventor: Wolfschoon-Pombo, Alan Frederick, 85354 Freising (DE); Eyselee, Hendrik, Glencoe IL 60022 (US); Martinez Fernandez, Antonio, 29664 Walsrode (DE); Douglas, Neil Griffith, Brunswick 3056 (AU)
(74) Representative: Hoffmann Eitle

(56) References cited:
- EP-A1- 1 752 046
- EP-A1- 1 769 687
- WO-A1-97/46111
- DE-A1- 4 032 698
- US-A- 4 341 801
- US-B1- 6 562 383
- KOCH INTERNATIONAL, DÜSSELDORF: "Production of Quarg and Other Types of Fresh Cheese", NORTH EUROPEAN DAIRY JOURNAL, vol. 53, no. 3/4, 1987, pages 75-83, XP008152511,
- KOSIKOWSKI F: "Cheesemaking by ultrafiltration", JOURNAL OF DAIRY SCIENCE, AMERICAN DAIRY SCIENCE ASSOCIATION, US, vol. 57, no. 4, 1 April 1974 (1974-04-01), pages 488-491, XP002094526, ISSN: 0022-0302

## Description

### Field

This application generally relates to an improved high fat cream cheese and, in particular, to an improved method of making such a cream cheese.

### Background

Cream cheese is an acidic, cultured or direct acidified, uncured cheese made of dairy components including a fat source (e.g., a mixture of cream and milk). Full fat cream cheese is a soft, mild-tasting cheese spread that in the U.S. contains at least 33% milk fat with a moisture content of not more than 55%, and a pH range of about 4.4 to about 4.9. In Europe, full fat cream cheese typically contains at least about 23% milk fat. These are generally considered to be high fat or full fat products.

Typically, in making cream cheese, a dairy food base, e.g., milk, is mixed with a fat source, e.g., cream, with a pasteurization step taking place thereafter. Before or after the pasteurization step, the cream cheese mix may be homogenized. After these steps, fermentation can be initiated by adding a bacteria culture to inoculate the mix with, for example, lactic acid producing cultures. The fermentation step can typically take place for at least about 10 hours and, in particular, about 1 to 2 days. Suitable cultures may comprise a lactic starter culture, selected from among mesophilic and thermophilic lactic acid producing bacteria, for instance. Typically, the fermentation process yields a final product that is preferable to consumers because of its "culture notes." Culture notes refer to the flavors and/or aromas associated with a fermented cream cheese product.

During the fermentation process, the milk becomes acidified to a point where the casein in milk precipitates out. This coagulation produces curds, which eventually become the cream cheese, and whey, which is the liquid portion that contains water, lactose and other proteins. A separation step is employed to remove the moisture from the curd portion, thus separating the curds from the whey. The separation step typically comprises a centrifugation process, where the whey is separated from the curd and is removed from the process. When using this type of separation process, a loss of flavor can occur upon the removal of the whey phase from the curd phase. After the separation step, the mixture may be homogenized, resulting in the final cream cheese product.

Ultrafiltration has been employed as the separation step when manufacturing a low fat cream cheese product to provide a more flavorable product. Use of a low fat cream cheese base does not typically cause processing problems due to having a less viscous consistency, and the membranes of the ultrafiltration unit do not usually plug or clog when a low fat cheese base is provided. Moreover, the ultrafiltration process retains both the curds and whey together in the retentate and separates out a moisture phase containing water and low molecular weight solutes having little, if any, whey proteins. Thus, flavor components and/or whey proteins remain in such low fat cream cheese products.

Attempts to use ultrafiltration to prepare a high fat cream cheese base have generally been unsuccessful due to processing problems such as a viscosity increase and/or pressure problems during the concentration process that result in early clogging of the ultrafiltration membranes. Ultrafiltration has been employed in the manufacture of a full fat cream cheese with some success when using an unfermented sweet cream mix as the starting ingredient to undergo ultrafiltration, which is often called "sweet" ultrafiltration. Sweet cream is a mixture of cream and milk that has not yet been fermented. Fermentation only occurs after the ultrafiltration process. However, due to too much calcium being concentrated during the ultrafiltration step, the final cream cheese product may have a bitter, unpleasing taste if the whey is not removed in a second separation step. Additionally, part of the lactose has been removed during the ultrafiltration process, which is a substrate needed by the bacteria during fermentation, thus making the pH reduction during fermentation more difficult. Thus, it has not been possible to provide a high fat cream cheese using ultrafiltration after fermentation of the cream cheese base.

Koch International GmbH Düsseldorf, North European Dairy Journal, vol. 53, 1987, 75 - 83 describes a method for preparing a cream cheese, wherein milk is pasteurized, cooled, fermented, heated and subjected to ultrafiltration to provide a retentate. Cream and salt are added to the retentate prior to packaging.

F.V. Kosikowski, Journal of Dairy Science, vol. 57, 1974, 488 - 491 describes a method for preparing a cream cheese product, wherein a skim milk retentate is blended with plastic cream, followed by adding lactic acid starter, salt and locust bean gum, followed by ripening at 32 °C to a pH of 4.7.

US 4,341,801 describes a method for preparing a cream cheese having a fat content of 33.2 %, wherein milk, cream and whey concentrate are mixed, subjected to ultrafiltration and fermented, followed by addition of salt and gum to the coagulum.

WO 97/46111 describes a process for preparing a water-continuous dairy base product, wherein a blend comprising milk ultrafiltration retentate and cream is fermented with a starter culture, heat treated, homogenized and filled in tubs.

### Summary

An improved process for making a high fat cream cheese product by means of ultrafiltration after fermentation is provided. Initially, a standardized milk base is provided having a low fat content, *i.e*., 7% or less. The milk base can be homogenized and pasteurized. The resulting sweet (*i.e*., unfermented) mix is then inoculated with a bacterial starter culture and fermented. The fermented milk base that results is pH adjusted and is then subjected to an ultrafiltration process.

In the present process, fermented sour cream is added for fat standardization and flavor purposes to a fermented low fat ultrafiltration concentrate. The sour cream has a fat level of 20% to 60%. Preferably, fermented sour cream having fat levels between 30% to 50% can be provided. The amount of fermented sour cream added is effective to obtain the desired overall fat content in the cream cheese product while maintaining the desired cream cheese texture. Indeed, the fermented sour cream may improve the creaminess profile of the cream cheese, as compared to a regular full fat cream cheese product made without ultrafiltration.

One benefit in using a lower fat, fermented cream cheese mix is that it allows for a high fat product to be made with an ultrafiltration process, without having the membrane clogging issues associated with the direct ultrafiltration of high fat, or full fat, fermented milk bases. The ultrafiltration process can be carried out without membrane clogging issues. A fermented, ultrafiltration low fat curd concentrate, to which the fermented sour cream can be added directly, can be obtained from the ultrafiltration process, in contrast to sweet ultrafiltration that requires fermentation to occur after ultrafiltration.

Another benefit of the ultrafiltration process is that it retains the whey protein along with the curds, rather than separating and removing the whey from the curds or cream cheese mix, which is the case with typical separation techniques, such as centrifugation, used to prepare high fat cream cheese. Performing ultrafiltration of the fermented low fat cream cheese base results in a yield increase in the final high fat product because the whey protein has been retained in the cream cheese.

An additional benefit of incorporating significant amounts of whey proteins into food products is that whey proteins have high nutritive value for humans. In fact, the amino acid composition of whey proteins is close to an ideal profile for human nutrition. Whey proteins are also understood to have superior emulsifying capabilities in comparison with casein. Without wishing to be bound by theory, the incorporation of whey protein is expected to reduce defects such as phase separation during processing. In addition, such whey proteins provide a low cost dairy product which, if successfully incorporated into cheese products, can significantly increase the overall efficiency and effectiveness of the cheese making process.

Finally, the high fat cream cheese product disclosed herein has an improved culture or creamy note due to whey protein retention and fermented sour cream addition.

### Brief Description of the Drawings

FIGURE 1 provides a schematic flow diagram of a basic method of making a high fat cream cheese product using an ultrafiltration process; and
FIGURE 2 provides a more detailed schematic flow diagram of a method of making a high fat cream cheese product using an ultrafiltration process.

### Detailed Description

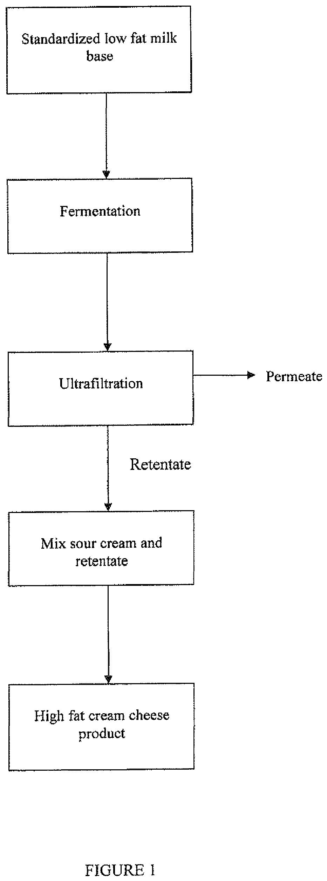

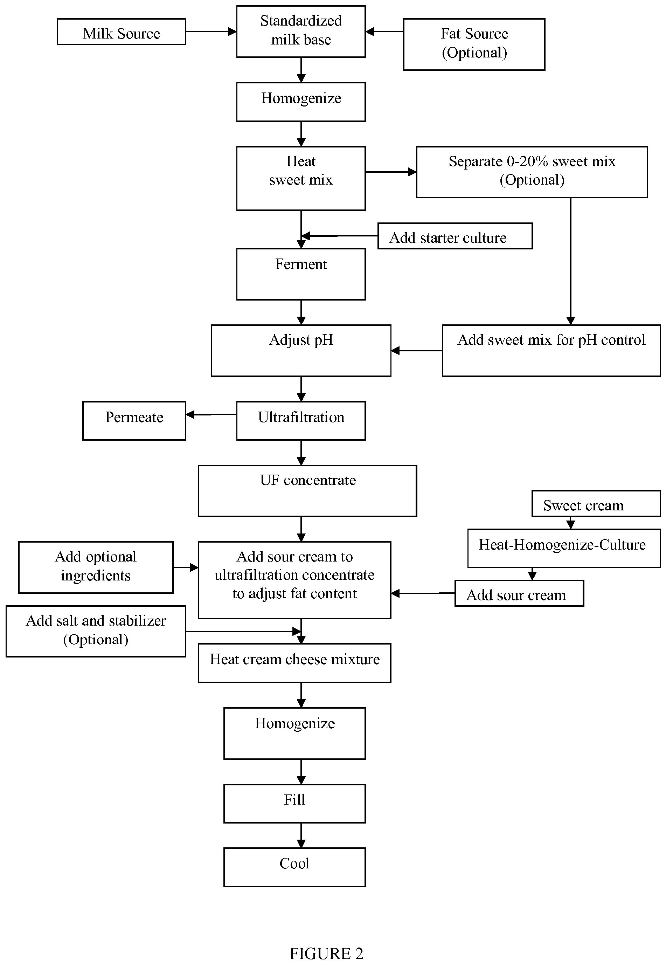

A method of making a high fat cream cheese product, and preferably a full fat cream cheese product, is described herein and illustrated in FIGS. 1 and 2. The high fat cream cheese product is made via ultrafiltration by first providing a fermented low fat curd or ultrafiltration concentrate made by ultrafiltration ("UF"), which is then mixed with fermented sour cream to yield the desired fat level in the final product and having the desired cream cheese texture and consistency. The fermented low fat curd concentrate is made from a light or low fat standardized milk base that is fermented and then ultrafiltered. The milk base is pH adjusted, before ultrafiltration but after fermentation, by addition of a sweet milk mix, which is a mixture containing cream and milk that has not been cultured (*i.e*., not fermented). For purposes herein, low fat as applied to the standardized milk base is intended to be less than 7% fat; and high fat as applied to the final cream cheese product is intended to be greater than 20%.

The standardized milk base can have a protein:fat ratio between 0.2 to 0.8 and can comprise milk and optionally cream. Standardized milk base is a milk that has been adjusted to a certain fat or fat/protein level by adding or subtracting components. The standardized milk base herein can comprise a milk source and a fat source that have a combined low fat level that is 7% or less, or can comprise only a milk source that is at the desired fat level (*i.e*., 7% or less).

The standardized milk base comprises a milk source and an optional fat source that provide a first fat level that is 7% or less. In one aspect, the standardized milk base comprises from 80% to 100% milk and from 0% to 20% fat, and in particular 93% to 100% milk and 0% to 7% fat. The fat level in the milk source can comprise 7% or less and, in particular, less than 5%, where a whole milk can contain between 4% to 5% fat and a skim milk can contain up to 0.1 % fat. The fat level of the fat source, such as cream, can be between 10% to 60% fat and, in particular, 40%, such that the cream, or other fat source, can result in a total combined fat level with the milk source of 7% or less. The milk source can comprise any milk typically used in the manufacture of cream cheese such as whole milk, low fat milk, skim milk, cream, and mixtures thereof. The milk source can be a liquid milk product or a milk powder or concentrate reconstituted with water. The fat source can comprise typical dairy fats, such as whole milk, cream, butter AMF (anhydrous milk fraction), or any other dairy source of butter.

Alternatively, if the milk source has a high enough fat content, such as when whole milk is used, a fat source (e.g., cream) may not be needed. However, even when using whole milk as the milk source additional cream or fat may be provided. Therefore, addition of a fat source to the milk source can be optional depending on the fat content of the milk source and the fat level (*e.g*., the first fat level) of the standardized milk base that is desired.

Once the initial standardized milk base is obtained, then the milk base can be homogenized and pasteurized. The homogenization of the standardized milk base can be either upstream or downstream, *i.e*., before or after heat treatment. In one aspect, the standardized milk base can be upstream homogenized at a pressure of 435 psi (30 bar) and then pasteurized at a temperature of 194°F (90°C) for 300 seconds. Homogenization pressures up to 2466 psi (170 bar) may be used and pasteurization temperatures of 175°F (79.5°C) for 30 seconds can be used. These are typical values used for sweet (*i.e*., unfermented) mix preparation. Alternatively, any other milk heat treatment step can be applied that is equivalent to the whey protein denaturation effect brought about by the heating combination specified, *i.e*., 194°F (90°C) for 300 seconds. The homogenized and pasteurized milk base that results can be referred to as a sweet (*i.e*., unfermented) mix, since it maintains a sweet quality or taste prior to being fermented.

The homogenization and pasteurization steps are followed by a fermentation step. A bacteria culture is added to inoculate the milk base for fermentation. The fermentation step can typically take place at room temperature for at least 10 hours and, in particular, up to a maximum of between 1 to 2 days. Preferably, the fermentation step takes place for 15 to 20 hours and in particular for 16 to 18 hours. In one aspect, suitable cultures may comprise a lactic starter culture, such as any lactic acid-producing bacteria used in conventional cream cheese making. Suitable lactic-acid producing bacteria can comprise, for example, *Streptococcus* or *Leuconostoc* such as *Streptococcus lactis, Streptococcus cremoris, Streptococcus diacetyllactis, Leuconostoc cremoris*, *Betacoccus cremoris*, and the like. However, it is preferred to utilize a lactic starter culture from the group selected from mesophilic and thermophilic lactic acid-producing bacteria, and still more preferred to use mesophilic bacteria.

The lactic acid producing bacteria can be used alone or in combination. Without wishing to be bound by theory, it is believed that the lactic acid-producing microbes are used in cheese manufacturing to ferment lactose present in the dairy liquid and to cause further decomposition of the clotted casein into smaller peptides and free amino acids as a result of the culture's production of proteases. The lactic acid producing culture may be added in amounts of 0.01% up to 2%. The cultures can be added as freeze-dried, frozen, or liquid cultures.

During fermentation, the pH of the standardized milk base may go down, as fermentation typically causes the pH to drop to 5.0 or less, or in particular to 4.6 or less. Therefore, the pH of the fermented milk base is adjusted prior to ultrafiltration. This is performed by addition of sweet (unfermented) mix to the fermented milk base. The sweet (*i.e*., unfermented) mix may be provided by a separately made or obtained sweet mix or, preferably, the sweet mix may originate from the milk base made herein. Adjustment of pH by addition of a sweet (*i.e*., unfermented) mix is generally preferred because it has the same composition as the sour mix, *i.e*., fermented milk base, with only the lactose, lactic acid and pH being different.

In one aspect, a portion of the milk base can be set aside prior to fermentation and kept "sweet," *i.e*., unfermented. This is the sweet (*i.e*., unfermented) mix that can be used as a pH modifying agent after the main portion of the sweet (*i.e*., unfermented) mix is fermented. Up to 20% of the unfermented milk base or sweet mix can be set aside prior to addition of a culture and subsequent fermentation, and can be maintained at a temperature of 50°F (10°C) or less and, in one aspect, at a temperature of 39°F (4°C). The remaining milk base can then be fermented. After fermentation, if the pH of the fermented milk base decreased, then the separated sweet (*i.e*., unfermented) milk base or sweet (*i.e*., unfermented) mix can be added back to the fermented milk base to raise the pH level. The pH of the milk base can be adjusted to a pH of 4.6 to 5.2 with sweet (*i.e*., unfermented) mix before ultrafiltration, and in particular to 4.75 pH. Adjusting the pH in this manner, by addition of a sweet, unfermented milk base allows for a more exact pH control of the milk base and does not unfavorably affect the culture notes as can sometimes occur with addition of a direct acid.

Ultrafiltration of the low fat milk base takes place after the fermentation step and pH adjustment. The ultrafiltration process can take place in a conventional ultrafiltration unit. Ultrafiltration of a milk base can comprise passing the milk base, or a portion thereof, through a variety of membrane filters in which hydrostatic pressure forces the liquid milk base against a semipermeable membrane. Suspended solids and solutes of high molecular weight are typically retained, which are called the retentate or ultrafiltration (UF) concentrate, while water and low molecular weight solutes pass through the membrane, which are called the permeate, and can be removed. Ultrafiltration is used to concentrate the milk base (*i.e*., remove some of the liquid phase), which then results in the UF concentrate having a higher fat content and solids content.

In one aspect, the milk base can be maintained at a temperature of 131°F (55°C) within the ultrafiltration unit. Temperatures can be employed that are between 104°F (40°C) and 140°F (60°C) and, preferably, at 122°F (50°C) to 131°F (55°C). One example of a semipermeable membrane that can be used is a spiral wound membrane, however, other membranes can be utilized such as a tubular membrane or a hollow fiber membrane. In another aspect, the ultrafiltration unit can have a 10 kDA spiral wound polyethersulphone membrane in stage 1 and 2, and a plate and frame 25,000 molecular weight cutoff membrane in stage 3.

Upon ultrafiltration, the low fat curd concentrate that results is the retentate and it may include both curds and whey, which is the water phase of the standardized milk. The total fat content, or a second fat level, of the retentate or UF concentrate is 20% or less and, in particular, the second fat level (of the retentate) is greater than the first fat level (of the standardized milk base). Thus, the fat level of the UF concentrate is greater than the fat level of the milk base prior to ultrafiltration, but not greater than 20%. The permeate phase which primarily consists of the separated water phase, is the phase that permeates or passes through the pores of the filter membrane during the ultrafiltration process. The permeate phase is what is removed from the low fat curd concentrate or retentate and may also consist of milk components that are soluble in the water phase.

To obtain the desired fat content in the UF concentrate, e.g., a second fat level greater than a first fat level but less than or equal to 20%, an appropriate ultrafiltration concentration factor should be used. This concentration factor can be determined by how much liquid needs to be removed from the starting milk base, *i.e*., passed through the membranes, to result in a UF concentrate having a fat level up to 20%, which is greater than the first fat level, and a solids level up to 36%. The ultrafiltrated retentate is concentrated to 2x or higher relative to the low fat milk base; preferably, it is 2.5x or higher. In one aspect, the second fat level, *i.e*., the fat level in the UF concentrate or retentate, will be 10% to 20% fat, and even still preferably from 15% to 20% fat.

The low fat curd concentrate that results is then combined with fermented sour cream to provide fat standardization by adjusting the fat level to the desired level in the final cream cheese product. The fermented sour cream that is added to the low fat curd concentrate contains a third fat level from 20% to 60%, and in particular 30% to 50%. The desired fat level in the final high fat cream cheese product is greater than 20%. In one aspect, the final fat level in the high fat cream cheese product can be from 20% to 40%. For the U.S. market, the final fat of the cream cheese product is preferably at least about 33%. In the U.S., and as defined per the current U.S. Standards of Identity, a full fat cream cheese is required to contain at least 33% fat in the cream cheese. In Europe, typical fat levels for full fat cream cheese can be about 23% and higher. Thus, the present method is capable of providing a high fat cream cheese product meeting either the current U.S. standards for high fat cream cheese or the typical levels in Europe for high fat cream cheese.

Therefore, the amount and the percent fat of the fermented sour cream to be added to the low fat curd concentrate varies depending on the final fat level desired and the fat level in the UF concentrate, among other factors. The first fat content and amount of retentate and the third fat content and amount of fermented sour cream can be provided in amounts effective to form the cream cheese product with a total fat content greater than 20%. In one aspect, the low fat curd concentrate and the fermented sour cream can be added in a 1:1 ratio, such that approximately equal parts of each is added to the mix. However, any amounts can be used that can together yield the desired fat level in the final product so long as the final texture associated with a conventional full fat cream cheese product is at least obtained.

For instance, where the retentate has a lower fat level, such as 0.35% fat when it is made from skim milk, then a greater amount of fermented sour cream can be added. When the retentate is higher in fat, such as 17% fat upon using a whole milk plus cream in its starting ingredients, then less fermented sour cream is needed to achieve the same fat level as with the previous skim milk made retentate. Therefore, the low fat curd concentrate and fermented sour cream can be added in any amount as long as the appropriate texture and desired final fat level are obtained and further depending on the fat level in the retentate and the fat level in the fermented sour cream. In another aspect, the UF concentrate and fermented sour cream can be added in ratios such as 1:1.5, 1.5:1, 2:1, and so on for UF concentrate to fermented sour cream. For purposes herein, "appropriate texture" is considered to be similar to the texture of conventional cream cheese products.

The fermented sour cream can be provided by fermenting a sweet (*i.e*., unfermented) cream using lactic acid bacteria like *Lactococcus cremoris, Lactococcus lactis, Lactococcus diacetylactis, Streptococcus thermophilus, Leuconostocs cremoris, Lactobacillus bulgaricus, acidophilus,* etc., or *Bifidobacteria* such as *B.longum, B. bifidum,* etc. The sour cream is soured by addition of the lactic acid bacteria and has a closer taste profile to cream cheese than other creams or fats. In one aspect, a fermented sour cream can be made from a pasteurized sweet (*i.e*., unfermented) cream, having approximately 40% fat, that is pasteurized and then homogenized. The homogenized cream can then be inoculated with a lactic acid starter culture, such as a mesophilic starter culture, and then allowed to ferment for up to 24 hours.

After fermentation, the fermented sour cream is obtained and is ready to be added to the UF concentrate. The temperatures of the UF concentrate and the fermented sour cream typically will be different. In one aspect, the UF concentrate can be 122°F (50°C) and the fermented sour cream can be 73°F (23°C). Optional ingredients may also be added to the UF concentrate, such as whey protein concentrate, or other typical ingredients used in dairy food products. After the UF concentrate and the fermented sour cream are combined, and any optional ingredients, the mixture can be heated. In one aspect, the cream cheese mixture can be heated to 117°F (47°C). In general, the cream cheese mixture can be heated to temperatures of 104°F (40°C) to 158°F (70°C).

After ultrafiltration and fermented sour cream addition, the pH of the cream cheese mixture can optionally be further adjusted by addition of a pH modifying agent, such as sweet (*i.e*., unfermented) cream, or by direct acidification. Optionally, salt and stabilizers (*i.e*., gums) can also be added to the cream cheese mixture to form the final cream cheese product. Stabilizers can be added to modify the texture of the cream cheese product, to enhance the texture and creaminess, and/or to control syneresis. The salt can be added to help improve the flavor and taste of the cream cheese product. Optional stabilizers can comprise xanthan gum, guar gum, tara gum, carob bean gum, carrageenan gum, alginate gum, pectin gum, konjac gum, carboxymethylcellulose gum, methylcellulose gum, hydroxyl propyl methylcellulose gum, and combinations thereof. Salt can be added to the cream cheese mixture in amounts from 0.05% to 1.3%, in particular, from 0.5% to 0.8%. The total amount of stabilizer (*i.e*., gums) can also be added in amounts from 0.05% to 0.7% and, in particular, from 0.15% to 0.3%. In one aspect, 0.7 parts of salt can be added with 0.25 parts of a gum or gums. The mixture can be blended again and a pH level of 4.6 to 5.2 can be targeted, depending upon how mild or sour a taste is desired.

In general, the purpose of the homogenization step is to create and/or maintain the fat in a highly dispersed state associated with the milk proteins rather than a curded state, *e.g*., such as comprising solely fat globules. The second homogenization step can also assist in de-lumping any clusters, if necessary, and further dispersing the gums. Homogenization is typically carried out at increased pressures. However, any effective homogenization method that can be used to homogenize dairy liquids can be used with the current method. In one aspect, a two-stage homogenizer may be used for the second homogenization step. Preferably, the first stage is operated at a pressure of 1160 psi (80 bar) to 5801 psi (400 bar) and the second stage can be operated at a pressure of 232 psi (16 bar) to 1160 psi (80 bar).

If desired, optional ingredients (*e.g*., spices, flavorants, colorants, fruits, nuts, condiments, and the like) can be added before or after the final homogenization step. Generally, it is preferred to add flavorants, colorants, and the like before the final homogenization so that they can be dispersed homogeneously throughout the final product; condiments (*e.g*., chives, scallions, and the like), however, are preferably added after the final homogenization to maintain their integrity in the final product. In one aspect, calcium may be added for calcium fortification. Suitable calcium sources can include, for example, calcium chloride, calcium sulfate, calcium phosphate, calcium citrate, and the like. Flavorings may include, for example, butter flavor, milk flavor, cheese flavor, and the like, various seasonings, fruit purees, and/or fruit powders. For the purpose of sweetening, mono and oligosaccharides such as sucrose, glucose, fructose, or maltose; sugar alcohols such as sorbitol, maltitol and lactitol; and low-calorie sweeteners such as saccharin, aspartame, stevioside, and thaumatin may be used. Colorings such as, for example, β-carotene, annatto, and the like may also be used.

After addition of any optional ingredients, the cream cheese mixture can be heated or pasteurized. In one aspect, the cream cheese mixture can be heated in a surface scrape heat exchanger. In another aspect, the cream cheese mixture can be heated to a temperature from 149°F (65°C) to 185°F (85°C) and, in particular, 165°F (74°C). In still another aspect, the cream cheese mixture can be pasteurized, using, for example, a temperature of 161°F (72°C) for 15 seconds. Following the heating step, the cream cheese mixture can again be homogenized.

After homogenization, the final product can be packaged and filled into tubs or plastic containers or any other packaging means appropriate for retail sale. Optionally, after homogenization but before filling, a texturizing step may be added, such as introducing the mixture into a creaming tank. After filling, the cream cheese can be further cooled within its packaging. The final cream cheese product can be packaged and cooled using conventional techniques, including both cold and hot packing techniques. Preferably, after the final homogenization step, the high fat cream cheese is cooled after it is hot filled into a container. The temperature during filling is typically 143°F (62°C) to 167°F (75°C). Typically, the cream cheese is hot filled directly into a container (*e.g*., cup, tub, and the like) suitable for retail sale and then sealed.

The final product results in a high fat cream cheese product that tastes, looks, and feels as good as (if not even better) than a conventionally made full fat cream cheese product made using conventional separation/centrifugation methods. The high fat cream cheese products made according to the method herein have smooth and firm textures, with a creamy and cultured flavor. Typically, 1/3 to 4/5 of the fat in the final product can be provided by fermented sour cream addition, without losing the flavor of a typical full fat cream cheese. The desired fat level in the final high fat cream cheese product can range from 20% to 40% fat.

The final pH of the high fat cream cheese product can be 4.6 to 5.2. The high fat cream cheese product can be provided as a spread (*i.e*., a spreadable cream cheese), a brick-like product (*i.e*., a firmer, block-shaped product), or an intermediate product. The high fat cream cheese product can have a hot Stevens firmness in the range of 27g to 37g measured at 171°F (77°C) for spreadable products, and a hot Stevens firmness at 54g to 74g for block (*i.e*., brick-like) cream cheese products. The high fat cream cheese product can also have a hot Haake viscosity between 55 Pas to 80 Pas also measured at 171°F (77°C) for spreadable cream cheese products, and a hot Haake between 55 to 130 Pas for a block product. A hot Stevens firmness is a measure of how firm the texture of the cream cheese is at a high (hot) temperature, e.g., 77°C, and a hot Haake viscosity is a measure of the consistency of the cream cheese prior to filling (e.g., a viscosity that is not too soft and not too firm is desired). The spreadable high fat cream cheese product can also have a cold Stevens firmness value of 120g to 253g, and the block product can have a cold Stevens firmness value of 295g to 350g. The cold Stevens firmness is a measure of how firm the texture of the cream cheese is at a lower temperature, e.g., 52°F (11 °C).

In one aspect, whole milk having about 4% fat and about 3.2% protein can be used whereby there is no (0%) addition of fat (*i.e*., cream) for standardization. After homogenization and heating, the whole milk can then be cultured. Next, ultrafiltration can be carried out using a concentration factor of about 2.5x to make a retentate having about 10% fat, about 7.8% protein and having about 23% total solids. After admixture of about 38 parts of approximately 48% fat fermented sour cream, a high fat cream cheese having about 24.8% fat, about 5.5% protein and about 34.5% solids can be obtained. If the same retentate above is used and instead 48 parts are mixed with 52 parts fermented sour cream, the high fat cream cheese will have about 30% fat, about 4.6% protein and about 38.6% solids.

In another aspect, skim milk can be used without adding any fat (*i.e*., cream) for standardization. Homogenizing, heating and then culturing can be followed by ultrafiltration with a concentration factor of 3.5x to get a retentate with about 0.35% fat, about 12% protein and about 17.8% solids. Then, about 40 parts of the UF retentate can be mixed with about 60 parts fermented sour cream having a fat content of about 48% fat. A high fat cream cheese can result having about 29% fat, about 5.8% protein and about 39% solids.

If to the same skim milk above, about 10% cream having about 48% fat is added for standardization, then homogenized, heated and cultured followed by ultrafiltration and concentrated using the same factor (3.5x), the retentate will have about 17.2% fat, about 11.4% protein and about 33% solids. Then, about 42 parts of the retentate can be combined with about 58 parts of a 48% fat fermented sour cream, to result in a final product with about 35% fat, about 5.7% protein and about 44.3% solids.

Referring to FIG. 1, a flow chart is shown depicting the basic method for making a high fat cream cheese product from ultrafiltration. The first step provides a low fat standardized milk base. The standardized milk base is subjected to a fermentation step, which can involve the addition of a lactic bacterial starter culture to the milk base, to form a fermented milk base. After fermentation, the next step is the pH adjustment step (not shown) and then the ultrafiltration of the fermented milk base. The ultrafiltration step is a separation step that results in a UF concentrate, *i.e*., retentate, comprising both the curds and the whey from the milk base component. The ultrafiltration concentrate can then be combined and mixed with a fermented sour cream to adjust the fat content in the final cream cheese mixture.

Referring to FIG. 2, a flow chart is shown depicting a more detailed method for making a high fat cream cheese product from ultrafiltration. The first step shows addition of a milk source combined with an optional fat source to form a first mixture that is a standardized milk base, which is then mixed. The milk base may then be subjected to a first homogenization step, followed by a heating step/pasteurization step. The next step involves the addition of a lactic bacterial starter culture to the milk base. Upon addition of the starter culture, the milk base is allowed to ferment for at least about 10 hours and preferably up to at least about 18 hours. After fermentation, the pH level of the fermented milk base is adjusted. The pH of the fermented milk base is adjusted by addition of a sweet (*i.e*., unfermented) milk mix to the fermented milk base. The sweet (*i.e*., unfermented) mix can be separated and set aside from the standardized milk base prior to it being fermented.

Following the optional pH adjustment, the next step is the ultrafiltration of the fermented milk base. After ultrafiltration, there are two streams that result; a permeate stream and a retentate stream. The permeate stream consists of the moisture that was in the milk base and is typically discarded. The second stream is the retentate or UF concentrate which comprises both the curds and the whey from the milk base component and is the concentrated cream cheese stream. The retentate or the ultrafiltration concentrate is then combined with a fermented sour cream to adjust the fat content in the final cream cheese mixture, and mixed.

The fermented sour cream can be made from a sweet (*i.e*., unfermented) cream that is first heated, then homogenized, and then cultured to result in the fermented sour cream component. Optional ingredients may also be added along with the sour cream, such as whey protein concentrate, or other ingredients typically used in dairy products.

Still optionally, salt and stabilizers may be added to the cream cheese mixture. After addition of the fermented sour cream, the next step comprises heating the cream cheese mixture, such as heating the mixture in a surface scrape heat exchanger. After heating, the cream cheese mixture is once again homogenized and following the homogenization the final high fat cream cheese product is then filled into a final package, such as plastic containers or tubs, which may then be subsequently cooled.

### EXAMPLES

### EXAMPLE 1

A standardized milk base was made using about 95% whole milk (a fat content of about 4.2%) standardized with about 5% pasteurized cream (a fat content of about 40% fat). The base had a final protein:fat ratio of about 0.53 and a combined total fat level, or first fat level, of about 6%. The standardized milk base was then homogenized at about 435 psi (30 bar) followed by pasteurizing at about 194°F (90°C) for about 300 seconds.

Afterward, about 790 kg of the standardized milk base were cooled down to about 75°F (24°C), or approximately room temperature, and inoculated with about 0.02% lactic starter culture, Probat 505, available from DANISCO A/S (Copenhagen, Germany). The milk base was allowed to ferment for at least about 18 hours. A portion of the milk base, approximately 15%, was not inoculated and was kept sweet, and held at about 39°F (4°C), in order to maintain a sweet (*i.e*., unfermented) milk mix for later pH adjustment, if necessary. The pH of the fermenting milk base was about 4.63 after about 18 hours and when cooling was begun. At the end of the fermentation process, about 19 hrs, the final pH was about 4.52. Therefore, a portion (about 15%) of the set aside sweet (*i*.*e*., unfermented) mix was added to the fermented milk base to adjust the pH to about 4.74 before the separation step.

About 263 kg of the fermented milk base was provided to the ultrafiltration unit for the separation step. A three-stage ultrafiltration unit, manufactured by Messinger System (Zürich, Switzerland), was equipped with 10kDa spiral wound polyethersulphone membranes, from Nadir membrane type POIO F, manufactured by Microdyn-Nadir GmbH (Wiesbaden, Germany), in stages 1 and 2. Stage 3 of the ultrafiltration unit was equipped with a plate and frame, 25,000 molecular weight cutoff membrane, model GR60PP, manufactured by The Dow Chemical Company (Midland, Michigan). The fermented milk base was heated in a plate heat exchanger to about 122°F (50°C), and the feed flow rate was about 170 l/h, at a pressure of about 14.5 psi (1 bar).

The ultrafiltration process was run first at a concentration factor of about 2.5x until about 27% solids was achieved and then was further concentrated until a final total solids of about 35.4% and a fat level of about 20% was achieved, using a concentration factor of about 3.4x. The permeate flow rate was about 120 l/h and the temperature at the end of stage 1 was about 129°F (54°C) with a pressure of about 63.8 psi (4.4 bar). The pressure difference was about 34.8 psi (2.4 bar) and the transmembrane pressure (TMP) was about 14.5 psi (1 bar). The temperature steadily increased over the run time, achieving about 145°F (63°C) in stage 3.

The retentate output flow rate in stage 3 was about 42 to about 52 l/h. The cooling was set to a temperature of about 140°F (60°C) in order to have a less viscous concentrate in the equipment. The pressure in stage 3 was about 116 psi ± 14.5 psi (8 bar ± 1 bar). The pressure difference was about 68 psi (4.7 bar) in stage 3 and the TMP was about 81 psi (5.6 bar).

Approximately 58 kg of the low fat curd, UF concentrate was collected and introduced into a multiverter, a type of blending and mixing tank, where the concentrate was gently stirred at 32 Hz (about 940 rpm) and with a recirculation loop pump working at 49 Hz (about 1400 rpm). The dry matter of the concentrate was about 35%.

The sour cream was made by providing approximately 45 kg of a pasteurized sweet (*i.e*., unfermented) cream, having a fat content of about 40%, and heating the sweet (*i.e*., unfermented) cream to a temperature of about 158°F (70°C) using two surface scrape heat exchangers ("SSHE"), such as those manufactured by ALPMA (Rott am Inn, Germany). One SSHE was set to about 91.4°F (33°C) and the second SSHE was set to about 158°F (70°C). The sweet (*i.e*., unfermented) cream was then homogenized at approximately 653/87 psi (45/6 bar) and a temperature of about 157°F (69.4°C). The Thoma number was 0.13 ((p2/p1) = 0.13), which represents the relationship between the pressure in stage 2 and the pressure in stage 1 of the homogenizer. The pump of the homogenizer was operated at 23 Hz and the motor of the homogenizer at 50 Hz. The flow rate of the stream was 120 l/h. Water was pushed out of the SSHE with 30% cream, where the 30% cream was used to push out the 40% cream from the SSHE and homogenizer.

The homogenized sweet (*i.e*., unfermented) cream for the sour cream manufacture was directly conveyed into a blender with a water mantle initially at about 39°F (4°C). The homogenized sweet (*i.e*., unfermented) cream was then inoculated with about 7.5 g mesophilic starter culture, such as Probat 505, and then cooled down to about 72°F (22.3°C). After about 20 hours, the pH of the cultured cream was about 4.79, and after about 23 hours it was about 4.57 pH at a temperature of about 70°F (21.3°C). Cooling was started and the pH achieved was about 4.49, 48 hrs after inoculation and 24 hrs after cooling was started. Analysis of the sour cream showed that the final fat content was about 39.5%, the lactose content was about 2.25%, the galactose was less than about 0.05%, and lactic acid was about 0.26% (L-form) and about 0.01% (D-form) at a pH of about 4.45 and a temperature of about 67.5°F (19.7°C).

After both the sour cream and the UF concentrate were obtained, both materials were stored for 1 day at about 39°F (4°C) before further processing. Afterwards, equal parts of concentrate and sour cream were blended together in the following way: first, about 45 kg sour cream was carefully warmed up to about 77°F (25°C) via the water mantle, which was at a temperature of about 122°F (50°C), and was slowly stirred in the blender.

The UP concentrate which was at a temperature of about 50°F (10°C) was first transferred into a mixer, known as a Stephan cutter, manufactured by Sympak Inc., Stephan Division (Mundelein, IL), and gently mixed to a temperature of about 131°F (55°C). Then, approximately 45 kg of the UF concentrate was weighed and added to the blender already containing the sour cream and mixed to obtain a cream cheese mixture. Upon addition of the UF concentrate, the temperature of the cream cheese mixture was about 98.6°F (37°C) and then the whole blend was transferred into a liquiverter, which is a high speed blender/mixer. The liquiverter is designed to incorporate dry solids, semi-solids or liquids into a slurry or liquid product. After further indirect heating with a water jacket at about 149°F (65°C), the blend was at a temperature of about 122°F (50°C). In the liquiverter, about 0.6 kg (about 0.7%) salt and about 0.23 total kg (about 0.25%) stabilizer were added to the cream cheese mixture and blended for about 10 minutes at a temperature of about 115.5°F (46°C). A pH of about 4.71 was measured. The stabilizer consisted of a mixture of about 0.18 kg (about 0.2%) carob bean gum, provided by Cesalpinia Food (Bergamo, Italy), and about 0.05 kg (about 0.05%) carrageenan, provided by Cargill (Atlanta, GA). After addition and mixing of the stabilizers at a temperature of about 115°F (46°C), the pH was about 4.79. The pump was run at about 59 Hz and the agitators were run at about 26 Hz, with a recirculation loop.

After blending the ingredients, the blend was left quiescent in the liquiverter for about 35 minutes and at a temperature of about 112°F (44.4°C). It was then heated in the SSHE to about 165°F (74°C). The cream cheese mixture was then divided into two portions that were homogenized at two different pressures. A first portion of the cream cheese mixture was homogenized at a pressure of about 2538/507 psi (175/35 bar) (p2/p1=0.2). About 10 kg of the homogenized mixture was immediately filled into 200 g tubs (sample "1"). About 60 kg of the remaining homogenized sample was transferred into a creaming tank and creamed for about 40 min; about 10 kg of the creamed sample was filled into 200 g tubs (sample "2") when the pressure reached about 510 mbar in the creaming tank. Another 10 kg of the cream cheese mixture from the creaming tank was filled in 200 g tubs when the pressure reached about 410 mbar, to provide an intentionally overcreamed sample (sample "3"), i.e., the optimal point for structure and filling was overdone. Sample 3 was overcreamed at a lower pressure because there was more heat and shear provided to the cream cheese mixture which reduced the pressure. The second portion of the cream cheese mixture was homogenized at a higher pressure of about 4351/870 psi (300/60 bar) (p2/p1=0.2) and about 10 kg was filled into 200 g tubs (sample "4"). Rheology measurements of these four samples, as determined with the Stevens and Haake apparatus, are reported below in Table 1.

**TABLE 1: Rheology Measurements**

| **Sample** | **Filling Temp (°C)** | **Stenvens Hot Firmness (g)** | **Haake Hot Viscosity (Pas)** |
|---|---|---|---|
| 1 | 77.3 | 27.0 | 57.1 |
| 2 | 77.8 | 22.5 | 32.1 |
| 3 | 78.1 | 16.5 | 15.4 |
| 4 | 77.0 | 37.0 | 65.9 |

Table 1 shows that samples 1 and 4 had good hot Stevens and Haake viscosity values for processing, whereas samples 2 and 3 were too soft for spreadable cream cheese products. Samples 2 and 3 were the samples that were creamed and overcreamed, respectively. Immediately after filling, all of the samples were placed onto a metal tray, and left there for about 50 min at room temperature. Afterward, the samples were placed in a cooling cabinet with the air recirculation set at position 1 for about 1 hr, and thereafter the samples were placed in a shipping box at about 39°F (4°C).

After five days the cream cheese samples were evaluated for their organoleptic characteristics. The cheeses that were homogenized at the lower pressure and subsequently subjected to a creaming process (samples 2 and 3) resulted in a grainy appearance. The creaming process proved to be detrimental to the quality and texture of those samples. It was observed that the creaming reaction was not necessary in this formula and processing method. The cream cheese samples 1 and 4 were both perceived to be smooth and firm, as compared to a typical full fat cream cheese made using conventional separation methods (*i.e*., centrifugation). The final compositions for samples 1 and 4 were about 30% fat, about 6.5% protein and about 40% total solids with a pH of about 4.83. Both samples also had an enhanced creaminess and a fermented dairy flavor, as well as excellent texture and nearly no syneresis (<0.4%). The cold Stevens firmness was measured for samples 1 and 4, resulting in values of 174±15 g and 237±15.7 g, respectively. See Table 2 for a summary of these results. The cold Stevens firmness values obtained for samples 1 and 4 were within the acceptable range of 120g to 253g for the full fat cream cheese product having spreadable qualities. The cream cheese sample (Sample 4) made at the higher homogenized pressure was firmer than the samples made at the lower homogenized pressure (Sample 1), yet both were still acceptable samples organoleptically.

**TABLE 2: Samples 1 and 4 Five Days After Manufacturing**

| **Sample** | **Homogenization Pressure** | **Stevens Cold Firmness (g)** | **Syneresis** | **Temperature °C** |
|---|---|---|---|---|
| 1 | 175/35 bar | 174±15 | 0.38% | 9.4 |
| 4 | 300/60 bar | 237±15.7 | 0.36% | 10.7 |

### EXAMPLE 2

Another variation of the high fat cream cheese product was made using the same process as in Example 1, with minor changes in the process parameters. Approximately 93% of the whole milk was provided, having a fat content of about 4%, and was standardized with about 7% pasteurized cream (having about 40% fat) to a protein:fat ratio of about 0.51. After homogenization and heat treatment, the sweet (*i.e*., unfermented) mix was cooled down to about 76°F (24.5°C) and inoculated with about 0.02% Probat 505. About 10% of the sweet (*i.e*., unfermented) mix was separated and set aside for later use in adjusting the pH after fermentation.

After about 16 hours of fermentation, the pH of the cultured mix was about 4.53 at a temperature of about 75°F (24°C), when the cooling was started. The cultured milk base was pH adjusted by adding the sweet (*i.*e., unfermented) mix that was previously set aside, to a pH of about 4.66 before the ultrafiltration step.

Ultrafiltration of the fermented milk base was conducted as in the previous example. A concentration factor of about 3.4x was utilized and a final total solids content of about 33% was obtained in the UF concentrate having a fat content of about 19%. The temperature in stage 3 steadily increased over the run time, achieving about 133°F (56°C).

The sour cream was made as in Example 1, and the final pH of the sour cream was at about 4.45 at a temperature of about 114°F (45°C). The fat content of the sour cream was at about 40%. Approximately 36 kg sour cream (about 52%) and about 33 kg UF concentrate (about 47%) were blended in the liquiverter at a temperature of about 111°F (44°C), this had a concentrate to sour cream ratio of approximately 1:1.1. The stabilizers comprising about 0.2% locust bean gum and about 0.05% carrageenan gum were added, for a total of about 0.25% stabilizers, and about 0.6% salt were added and mixed, with a pH of about 4.64 measured afterward. The final fat content of the mixture was about 30% with a protein level of about 5.7% and total solids of about 39%.

Three samples, about 10 kg each, of the mix were obtained and homogenized at three different pressure settings. The first sample ("Sample 5") was homogenized at about 1450/290 psi (100/20 bar), the second sample ("Sample 6") was homogenized at about 2538/508 psi (175/35 bar), and the third sample ("Sample 7") was homogenized at about 4351/870 psi (300/60 bar). After homogenization, the samples were filled in separate 200 g tubs. The hot viscosities of each sample was then measured, with the results presented below in Table 3.

**TABLE 3: Rheology Measurements**

| **Sample** | **Pressure** | **Stevens Hot Firmness (g)** | **Haake Hot Viscosity (Pas)** | **Temperature (°C)** |
|---|---|---|---|---|
| 5 | 100/20 bar | 27.9 | 41.7 | 72.1 |
| 6 | 175/35 bar | 33.9 | 76.8 | 66.0 |
| 7 | 300/60 bar | 31.1 | 68.0 | 72.2 |

All three samples had good organoleptic properties, such that all of them had a good creamy and cultured flavor. The difference between the various homogenization pressures resulted in different firmness of the final product, yet all three samples had a Stevens Hot Firmness value within the desired range of 27g to 37g. Firmness tended to increase as the homogenization pressure increased. Two of the samples, samples 6 and 7, resulted in high fat cream cheese products that were comparable to a full fat cream cheese made using conventional separation methods, such as centrifugation.

However, the Haake Hot Viscosity values were not all within the desired range of 55 Pas to 80 Pas. Sample 5 was outside of this range, most likely due to the lower homogenization pressure used. Samples 6 and 7 had a viscosity value within the desired range, which was comparable to a full fat cream cheese made using conventional separation methods (*e.g*., such as centrifugation) and having the desired firmness and viscosity for a spreadable cream cheese.

### EXAMPLE 3

Another variation of the high fat cream cheese product was made using the same process as in Example 1, with minor changes in the process parameters and incorporating the addition of a whey protein concentrate in the cream cheese mixture. The milk base comprised a 2.5% fat milk source without any additional fat source added. This milk source was heated at about 194°F (90°C) for about 5 minutes and subsequently homogenized at about 435 psi (30 bar) and cooled to about 72°F (22°C). A culture was then added to the milk base and fermented to a pH of about 4.6. After fermentation, the pH was readjusted to about 4.8 by addition of sweet (*i.e*., unfermented) mix. Ultrafiltration was then carried out using a concentration factor of about 2.85x at 122°F (50°C), which then resulted in the low fat curd concentrate having a total fat level (*i.e*., second fat level) of about 7%, and about 23% total solids.

After the low fat curd concentrate, or UF concentrate, was obtained, approximately 24.5 kg of the UF concentrate, or about 49%, was combined with about 23.5 kg of sour cream, or about 47%, the sour cream having a total fat content of about 40%. To this mixture was also added about 2 kg of whey protein concentrate, or about 4%. The whey protein concentrate had a fat level of about 2.45%. The mixture was heated to about 122°F (50°C), and then additional salt and stabilizer, e.g., gums, were added to the mixture and blended. Approximately 0.25 kg of salt, or about 0.5%, was added to about 50 kg of the cream cheese mixture (about 99%) along with equal amounts, 0.076 kg, of carob bean gum and carrageenan gum, which was about 0.15% each. The mixture obtained was blended and heated to about 167°F (75°C).

The cream cheese mixture was homogenized at a pressure of about 4351/870 psi (300/60 bar). The sample was further subjected to a shear treatment, such as a creaming step before filling into 200 g tubs. The final cream cheese product had a total solids level of about 34%, a total fat content of about 22% and a pH of about 4.88 with a final protein level of about 6%.

The firmness of the final sample was measured, such as by the Stevens cold firmness test, which had a value of about 138 g, which was within the firmness range of 120 g to 200 g for a conventional full fat cream cheese product made using known separation methods.

### EXAMPLE 4

A modified formula for a creamy full fat cream cheese product is provided herein. The final product is a block product, rather than a spreadable product, and contains a higher protein level, due to skim milk addition to the standardized milk base. The standardized milk base was made using about 87% whole milk (having a fat content of about 4.5%) standardized with about 3.4% pasteurized cream, having a fat content of about 48% fat, and further standardized with addition of about 10% skim milk, having a fat content of about 0.15%. A final protein:fat ratio of about 0.79 is obtained and a combined total fat level, or first fat level, of about 5.5%. The standardized milk base was then homogenized at about 435 psi (30 bar) followed by pasteurizing at about 194°F (90°C) for about 300 seconds.

Afterward, about 575 kg of the standardized milk base were cooled down to about 79°F (26°C), or approximately room temperature, and inoculated with about 0.02% lactic starter culture, Probat 505. The milk base was allowed to ferment for at least about 16 hours. A portion of the milk base, approximately 10%, was not inoculated and was kept sweet, and held at about 39°F (4°C), in order to maintain a sweet (*i.e*., unfermented) milk mix for later pH adjustment, if necessary. The pH of the fermenting milk base was about 4.56 after about 16 hours and when cooling was begun. At the end of the fermentation process, the final pH was adjusted to about 4.66. Therefore, a portion of the set aside sweet (*i.e*., unfermented) mix was added to the fermented milk base to adjust the pH to about 4.66 before the separation step. The fermented milk base was heated in a plate heat exchanger to about 122°F (50°C) before ultrafiltration.

The fermented milk base was provided to the ultrafiltration unit for the separation step. A similar ultrafiltration unit as in Example 1 was used. The ultrafiltration process was run at a concentration factor of about 3x until about 35% solids was achieved. Prior to the ultrafiltration step, the protein level was at about 4%, much higher than the previous examples.

Approximately 50 kg of the low fat curd, UF concentrate was collected and introduced into a multiverter, where the concentrate was gently stirred at 23.7 Hz (about 682 rpm) and with a recirculation loop pump working at 37.5 Hz (about 1107 rpm). The dry matter of the concentrate was about 35%.

The sour cream was made using similar procedures as in Example 1, where the final sour cream product had a fat content of about 48%. The sour cream was heated in a heat exchanger to about 140°F (60°C) and added to the liquiverter containing the UF concentrate. About 55% UF concentrate and 44% sour cream were blended together. About 0.45 kg salt, or 0.5%, and stabilizers were added. The stabilizers comprised 0.23% locust bean gum (0.2 kg) and about 0.10% of a combination of alginate and carrageenan (0.09 kg), where the ratio of sodium alginate to carrageenan was about 60:40.

After blending the ingredients, the blend was then heated in the SSHE to about 167°F (75°C) at a pH of about 4.75. The cream cheese mixture was then divided into two portions that were homogenized at two different pressures. A first portion of the cream cheese mixture was homogenized at a pressure of about 2538/507 psi (175/35 bar) (p2/p1=0.2). About 10 kg of the homogenized mixture was immediately filled into 200 g tubs (sample "8"). The second portion of the cream cheese mixture was homogenized at a higher pressure of about 4351/870 psi (300/60 bar) (p2/p1=0.2) and about 10 kg was filled into 200 g tubs (sample "9"). Rheology measurements of these two samples after hot filling, as determined with the Stevens and Haake apparatus, are reported below in Table 4. Two tubs for each sample were measured.

**TABLE 4: Rheology Measurements**

| **Sample** | **Filling Temp (°C)** | **Stenvens Hot Firmness (g)** | **Haake Hot Viscosity (Pas)** |
|---|---|---|---|
| 8-A | 68 | -- | 85.6 |
| 8-B | 60 | 54 | -- |
| 9-A | 58 | -- | 127.3 |
| 9-B | 64 | 74 | -- |

Table 4 shows that all of the samples had slightly higher hot Stevens and Haake viscosity values than samples 1-7. This is because of the slight change in the formulation and the increased protein content. Thus, a higher firmness cream cheese product can be obtained from a higher protein level.

Immediately after filling, all of the samples were placed onto a metal tray, and left there for about 20 minutes at room temperature. Afterward, the samples were placed in a cooling cabinet with the air recirculation set at position 2 for 1 hr, and thereafter the samples were placed in a shipping box at about 39°F (4°C).

The cream cheese samples were also evaluated for their organoleptic characteristics. The cream cheese samples 8 and 9 were both perceived to be smooth and firm, as compared to a typical full fat cream cheese made using conventional separation methods (*i*.*e*., centrifugation). The final compositions for samples 8 and 9 were about 30% fat, about 7.4% protein and about 42% total solids with a pH of about 4.75. Both samples also had an enhanced creaminess and a fermented dairy flavor, as well as excellent texture and nearly no syneresis (<0.2%).

The cold Stevens firmness was measured for both samples, where an average of two test results is shown. See Table 5 for a summary of these results. The cold Stevens firmness values obtained were within an acceptable range of 120g to 350g for a full fat cream cheese brick-like product having a firmer composition than the spreadable product. Homogenization at the two different pressures resulted in two cream cheese products with different firmness, however, major sensory attributes did not vary between the two. The cream cheese sample (Sample 9) made at the higher homogenized pressure was firmer than the sample made at the lower homogenized pressure (Sample 8), yet both were still acceptable samples organoleptically. The cold Stevens firmness values were about 1.5 to 1.7 times higher than previous samples 1-7, again due to the formulation variation and higher protein level.

**TABLE 5: Firmness and Syneresis Results**

| **Sample** | **Homogenization Pressure** | **Average Stevens Cold Firmness (g)** | **Syneresis** | **Temperature °C** |
|---|---|---|---|---|
| 8 | 175/35 bar | 296.6 | 0.16% | 11.6 |
| 9 | 300/60 bar | 346.2 | 0.12% | 11.5 |

The methods provided herein demonstrate that it is possible to make a high fat cream cheese using ultrafiltration without experiencing the limitations typically encountered with the membrane technology and ultrafiltration of full fat cream cheese. The methods comprise first making a low fat curd with ultrafiltration and then standardizing the final fat content via post-concentration addition of sour cream. The addition of sour cream can increase the creamy, cultured flavor in the final cream cheese product as well as increasing the final fat content.

From the foregoing, it will be appreciated a method of making a high fat cream cheese product via ultrafiltration is provided. However, numerous modifications and variations could be made thereto by those skilled in the art without departing from the scope of the method set forth in the claims. Therefore, the disclosure is not limited to the aspects and embodiments described hereinabove, or to any particular embodiments. Various modifications to the method could be made which can result in substantially the method of making a high fat cream cheese product via ultrafiltration.

## Claims

1. A method of making a cream cheese product comprising the steps of:
providing a standardized milk base having 80% to 100% of a milk source and 0% to 20% of a fat source, wherein the milk source has less than or equal to 7% fat, wherein the fat source has less than 60% fat, and wherein the standardized milk base has a first fat content of less than or equal to 7%;
fermenting the standardized milk base with a bacteria culture to form a fermented milk base;
adjusting the pH level of the fermented milk base prior to an ultrafiltration step by addition of an unfermented, sweet milk mix;
ultrafiltrating the fermented milk base at a concentration factor of 2X or greater to form a retentate and a permeate, wherein the retentate has a second fat content greater than the first fat content and less than or equal to 20%;
providing a fermented sour cream with a third fat content from 20% to 60%; and
mixing the retentate and the fermented sour cream to form the cream cheese product, wherein the first fat content and amount of retentate and the third fat content and amount of fermented sour cream are effective to form the cream cheese product with a total fat content greater than 20%.

2. The method according to claim 1, wherein the milk source is selected from the group consisting of whole milk, low fat milk, skim milk, cream, and mixtures thereof, and the fat source is a cream.

3. The method according to claim 1 or 2, further comprising the step of homogenizing and heating the standardized milk base prior to fermenting.

4. The method according to any one of claims 1 to 3, further comprising the step of adjusting the pH of the fermented milk base prior to ultrafiltration to a pH level of 4.6 to 5.2.

5. The method according to any one of claims 1 to 4, further comprising the step of adding salt and a stabilizer to the retentate, wherein the stabilizer is preferably selected from the group consisting of xanthan gum, guar gum, tara gum, carob bean gum, carrageenan gum, alginate gum, pectin gum, konjac gum, carboxymethylcellulose gum, methylcellulose gum, hydroxyl propyl methylcellulose gum, and combinations thereof.

6. The method according to any one of claims 1 to 5, wherein the mixed retentate and fermented sour cream are homogenized.

7. The method according to claim 6, wherein a homogenization pressure in a first stage of the homogenizer is between 1160 psi (80 bar) and 5801 psi (400 bar) and a homogenization pressure in a second stage of the homogenizer is between 232 psi (16 bar) and 1160 psi (80 bar).

8. The method according to any one of claims 1 to 7, wherein the standardized milk base is fermented for at least 16 hours.

9. The method according to any one of claims 1 to 8, wherein the final fat level of the cream cheese product is between 22% to 33%.

10. The method according to any one of claims 1 to 9, wherein the standardized milk base has a protein to fat ratio between 0.2 to 0.8.

11. A cream cheese product prepared by a process comprising:
providing a low fat milk base having a milk source and an optional fat source, the milk base having a first fat content less than or equal to 7%;
adding a bacteria culture to the milk base;
fermenting the milk base to form a fermented milk base;
adjusting the pH of the fermented milk base prior to a separation step by addition of an unfermented, sweet milk mix;
performing the separation step at a concentration factor of 2X or greater that separates a low fat concentrate from the fermented milk base, the low fat concentrate having a second fat content greater than the first fat content and up to 20%;
providing a fermented sour cream having a fat content from 20% to 60%; and
adding the fermented sour cream to the low fat concentrate resulting in a cream cheese mixture,
wherein a final cream cheese product has a fat content greater than 20%.

12. The product of claim 11, wherein the separation step comprises ultrafiltration, or wherein the milk source comprises 80% to 100% and the fat source comprises 0% to 20%.

13. The product of claim 11 or 12, wherein the final cream cheese product is a spread or a block-type product, and wherein the final cream cheese product has a hot Stevens firmness of 27 g to 37 g if a spread, and 54 g to 74 g if a block, and a hot Haake viscosity of 55 Pa·s to 80 Pa·s if a spread and 55 Pa·s to 130 Pa·s if a block.

14. The product of claim 11, wherein the step of adjusting the pH of the fermented milk base prior to the separation step is to a pH level of 4.6 to 5.2.

## Patentansprüche

1. Verfahren zum Herstellen eines Frischkäseprodukts, das die folgenden Schritte umfasst:
Bereitstellen einer standardisierten Milchbasis, die zu 80 % bis 100 % eine Milchquelle und 0 % bis 20 % eine Fettquelle aufweist, wobei die Milchquelle weniger als oder gleich 7 % Fett aufweist, wobei die Fettquelle weniger als 60 % Fett aufweist und wobei die standardisierte Milchbasis einen ersten Fettgehalt von weniger als oder gleich 7 % aufweist;
Vergären der standardisierten Milchbasis mit einer Bakterienkultur, um eine vergorene Milchbasis zu bilden;
Einstellen des pH-Werts der vergorenen Milchbasis vor einem Ultrafiltrationsschritt durch Zugabe einer unvergorenen, süßen Milchmischung;
Ultrafiltrieren der vergorenen Milchbasis bei einem Konzentrationsfaktor von 2X oder mehr, um ein Retentat und ein Permeat zu bilden, wobei das Retentat einen zweiten Fettgehalt von mehr als dem ersten Fettgehalt und weniger als oder gleich 20 % aufweist;
Bereitstellen einer vergorenen sauren Sahne mit einem dritten Fettgehalt von 20 % bis 60 %; und
Mischen des Retentats und der vergorenen sauren Sahne, um das Frischkäseprodukt zu bilden, wobei der erste Fettgehalt und die Menge des Retentats und der dritte Fettgehalt und die Menge der vergorenen sauren Sahne effektiv das Frischkäseprodukt mit einem Gesamtfettgehalt von mehr als 20 % bilden.

2. Verfahren nach Anspruch 1, wobei die Milchquelle ausgewählt ist aus der Gruppe bestehend aus Vollmilch, teilentrahmter Milch, Magermilch, Sahne und Mischungen davon, und die Fettquelle eine Sahne ist.

3. Verfahren nach Anspruch 1 oder 2, ferner umfassend den Schritt des Homogenisierens und Erhitzens der standardisierten Milchbasis vor dem Vergären.

4. Verfahren nach einem der Ansprüche 1 bis 3, ferner umfassend den Schritt des Einstellens des pH der vergorenen Milchbasis vor der Ultrafiltration auf einen pH-Wert von 4,6 bis 5,2.

5. Verfahren nach einem der Ansprüche 1 bis 4, ferner umfassend den Schritt des Zugebens von Salz und einem Stabilisierungsmittel zu dem Retentat, wobei das Stabilisierungsmittel vorzugsweise ausgewählt ist aus der Gruppe bestehend aus Xanthangummi, Guargummi, Taragummi, Johannisbrotgummi, Carrageenangummi, Alginatgummi, Pektingummi, Konjacgummi, Carboxymethylcellulosegummi, Methylcellulosegummi, Hydroxylpropylmethylcellulosegummi und Kombinationen davon.

6. Verfahren nach einem der Ansprüche 1 bis 5, wobei das Gemisch aus Retentat und vergorener saurer Sahne homogenisiert wird.

7. Verfahren nach Anspruch 6, wobei ein Homogenisierungsdruck in einem ersten Stadium des Homogenisators zwischen 8000 kPa (1160 psi (80 bar)) und 40000 kPa (5801 psi (400 bar)) liegt und ein Homogenisierungsdruck in einem zweiten Stadium des Homogenisators zwischen 1600 kPa (232 psi (16 bar)) und 8000 kPa (1160 psi (80 bar)) liegt.

8. Verfahren nach einem der Ansprüche 1 bis 7, wobei die standardisierte Milchbasis für mindestens 16 Stunden vergoren wird.

9. Verfahren nach einem der Ansprüche 1 bis 8, wobei der letztendliche Fettgehalt des Frischkäseprodukts zwischen 22 % bis 33 % beträgt.

10. Verfahren nach einem der Ansprüche 1 bis 9, wobei die standardisierte Milchbasis ein Verhältnis von Protein zu Fett zwischen 0,2 bis 0,8 aufweist.

11. Frischkäseprodukt, hergestellt durch ein Verfahren, umfassend:
Bereitstellen einer teilentrahmten Milchbasis, die eine Milchquelle und eine fakultative Fettquelle aufweist, wobei die Milchbasis einen ersten Fettgehalt von weniger als oder gleich 7 % aufweist;
Zugeben einer Bakterienkultur zu der Milchbasis;
Vergären der Milchbasis, um eine vergorene Milchbasis zu bilden;
Einstellen des pH der vergorenen Milchbasis vor einem Trennungsschritt durch
Zugeben einer unvergorenen, süßen Milchmischung;
Durchführen des Trennungsschritts bei einem Konzentrationsfaktor von 2X oder mehr, der ein Konzentrat mit niedrigem Fettgehalt von der vergorenen Milchbasis abtrennt, wobei das Konzentrat mit niedrigem Fettgehalt einen zweiten Fettgehalt aufweist, der größer als der erste Fettgehalt und bis zu 20 % beträgt;
Bereitstellen einer vergorenen sauren Sahne mit einem Fettgehalt von 20 % bis 60 %; und
Zugeben der vergorenen sauren Sahne zu dem Konzentrat mit niedrigem Fettgehalt, was eine Frischkäsemischung ergibt,
wobei ein fertiges Frischkäseprodukt einen Fettgehalt von mehr als 20 % aufweist.

12. Produkt nach Anspruch 11, wobei der Trennungsschritt Ultrafiltration umfasst oder wobei die Milchquelle 80 % bis 100 % umfasst und die Fettquelle 0 % bis 20 % umfasst.

13. Produkt nach Anspruch 11 oder 12, wobei das fertige Frischkäseprodukt ein Streich- oder Stückprodukt ist und wobei das fertige Frischkäseprodukt eine Heißfestigkeit nach Stevens von 27 g bis 37 g, wenn es streichfähig ist, und 54 g bis 74 g, wenn es ein Stück ist, und eine Heißviskosität nach Haake von 55 Pa.s bis 80 Pa.s, wenn es streichfähig ist, und 55 Pa.s bis 130 Pa.s, wenn es ein Stück ist, aufweist.

14. Produkt nach Anspruch 11, wobei der Schritt des Einstellens des pH der vergorenen Milchbasis vor dem Trennungsschritt auf einen pH-Wert von 4,6 bis 5,2 erfolgt.

## Revendications

1. Procédé de fabrication d'un produit de crème de fromage comprenant les étapes consistant à :
fournir une base de lait standardisée ayant 80 % à 100 % d'une source laitière et 0 % à 20 % d'une source de matières grasses, dans lequel la source laitière a une teneur inférieure ou égale à 7 % de matières grasses, dans lequel la source de matières grasses a moins de 60 % de matières grasses, et dans lequel la base de lait standardisée a une première teneur en matières grasses inférieure ou égale à 7 % ;
fermenter la base de lait standardisée avec une culture de bactéries pour former une base de lait fermentée ;
ajuster le niveau de pH de la base de lait fermentée avant une étape d'ultrafiltration par addition d'un mélange de lait sucré non fermenté ;
procéder à une ultrafiltration de la base de lait fermentée à un facteur de concentration de 2X ou plus pour former un rétentat et un perméat, dans lequel le rétentat a une deuxième teneur en matières grasses supérieure à la première teneur en matières grasses et inférieure ou égale à 20 % ;
fournir une crème acide fermentée avec une troisième teneur en matières grasses de 20 % à 60 % ; et
mélanger le rétentat et la crème acide fermentée pour former le produit de crème de fromage, dans lequel la première teneur en matières grasses et la quantité du rétentat et la troisième teneur en matières grasses et la quantité de la crème acide fermentée sont efficaces pour former le produit de crème de fromage avec une teneur totale en matières grasses supérieure à 20 %.

2. Procédé selon la revendication 1, dans lequel la source laitière est choisie dans le groupe constitué de lait entier, lait pauvre en matières grasses, lait écrémé, crème, et des mélanges de ceux-ci, et la source de matières grasses est une crème.

3. Procédé selon la revendication 1 ou 2, comprenant en outre l'étape consistant à homogénéiser et chauffer la base de lait standardisée avant fermentation.

4. Procédé selon l'une quelconque des revendications 1 à 3, comprenant en outre l'étape d'ajustement du pH de la base de lait fermentée avant ultrafiltration jusqu'à un niveau de pH de 4,6 à 5,2.

5. Procédé selon l'une quelconque des revendications 1 à 4, comprenant en outre l'étape consistant à ajouter du sel et un agent stabilisant au rétentat, dans lequel l'agent stabilisant est, de préférence, choisi dans le groupe constitué de gomme de xanthane, gomme de guar, gomme tara, gomme de caroube, gomme de carraghénane, gomme d'alginate, gomme de pectine, gomme de konjac, gomme de carboxyméthylcellulose, gomme de méthylcellulose, gomme d'hydroxypropylméthylcellulose, et des combinaisons de celles-ci.

6. Procédé selon l'une quelconque des revendications 1 à 5, dans lequel le rétentat et la crème acide fermentée mélangés sont homogénéisés.

7. Procédé selon la revendication 6, dans lequel une pression d'homogénéisation dans un premier étage de l'homogénéiseur est comprise entre 8000 kPa (1160 psi (80 bar)) et 40000 kPa (5801 psi (400 bar)) et une pression d'homogénéisation dans un deuxième étage de l'homogénéiseur est comprise entre 1600 kPa (232 psi (16 bar)) et 8000 kPa (1160 psi (80 bar)).

8. Procédé selon l'une quelconque des revendications 1 à 7, dans lequel la base de lait standardisée est fermentée pendant au moins 16 heures.

9. Procédé selon l'une quelconque des revendications 1 à 8, dans lequel le taux final en matières grasses du produit de crème de fromage est compris entre 22 % et 33 %.

10. Procédé selon l'une quelconque des revendications 1 à 9, dans lequel la base de lait standardisée présente un rapport de protéine à matières grasses compris entre 0,2 et 0,8.

11. Produit de crème de fromage préparé par un processus comprenant :
la fourniture d'une base de lait à faible teneur en matières grasses ayant une source laitière et une source de matières grasses facultative, la base de lait ayant une première teneur en matières grasses inférieure ou égale à 7 % ;
l'ajout d'une culture de bactéries à la base de lait ;
la fermentation de la base de lait pour former une base de lait fermentée ;
l'ajustement du pH de la base de lait fermentée avant une étape de séparation par
addition d'un mélange de lait sucré non fermenté ;
l'exécution de l'étape de séparation à un facteur de concentration de 2X ou plus, laquelle sépare un concentré pauvre en matières grasses de la base de lait fermentée, le concentré pauvre en matières grasses ayant une deuxième teneur en matières grasses supérieure à la première teneur en matières grasses et jusqu'à 20 % ;
la fourniture d'une crème acide fermentée ayant une teneur en matières grasses allant de 20 % à 60 % ; et
l'ajout de la crème acide fermentée au concentré pauvre en matières grasses donnant un mélange de crème de fromage,
dans lequel un produit de crème de fromage final a une teneur en matières grasses supérieure à 20 %.

12. Produit selon la revendication 11, dans lequel l'étape de séparation comprend une ultrafiltration, ou dans lequel la source laitière constitue 80 % à 100 % et la source de matières grasses constitue 0 % à 20 %.

13. Produit selon la revendication 11 ou 12, dans lequel le produit de crème de fromage final est un produit à étaler ou de type bloc, et dans lequel le produit de crème de fromage final a une fermeté de Stevens à chaud de 27 g à 37 g s'il s'agit d'un produit à étaler, et de 54 g à 74 g s'il s'agit d'un bloc, et une viscosité Haake à chaud de 55 Pa.s à 80 Pa.s 'il s'agit d'un produit à étaler et de 55 Pa.s à 130 Pa.s s'il s'agit d'un bloc.

14. Produit selon la revendication 11, dans lequel l'étape d'ajustement du pH de la base de lait fermentée avant l'étape de séparation est jusqu'à un niveau de pH de 4,6 à 5,2.
